# EUROPÄISCHE PATENTSCHRIFT

(11) **EP 2 989 711 B1**
(45) Veröffentlichungstag und Bekanntmachung des Hinweises auf die Patenterteilung: **08.03.2017**
(21) Anmeldenummer: 14725383.5
(22) Anmeldetag: 05.05.2014
(51) Int. Cl.: H02K 1/16, H02K 1/20, H02K 1/18, H02K 5/18, H02K 9/02

(54) **LUFTGEKÜHLTE ELEKTRISCHE MASCHINE MIT KÜHLRIPPEN AUS STATORBLECH**
AIR-COOLED ELECTRIC MACHINE WITH COOLING FINS MADE FROM STATOR SHEET METAL
MACHINE ÉLECTRIQUE REFROIDIE PAR AIR AVEC NERVURES DE REFROIDISSEMENT EN TÔLE DE STATOR

(30) Priorität: 24.05.2013 EP 13169135
(43) Veröffentlichungstag der Anmeldung: 02.03.2016
(73) Patentinhaber: Siemens Aktiengesellschaft, 80333 München (DE)
(72) Erfinder: KÖHLER, Marco, 91233 Neunkirchen am Sand (DE); GÖMMEL, Gerhard, 92353 Postbauer-Heng (DE); OUDE KOTTE, Freerk Jacobus, 90451 Nürnberg (DE); RETTIG, Thomas, 91056 Erlangen (DE)
(86) Internationale Anmeldenummer: PCT/EP2014/059081
(87) Internationale Veröffentlichungsnummer: WO 2014/187661

(56) Entgegenhaltungen:
- IT-A1- MI 941 458
- JP-A- H0 349 542
- JP-A- H0 946 942
- JP-U- H0 670 452
- US-A- 3 436 579
- US-A1- 2004 000 821

## Beschreibung

Die vorliegende Erfindung betrifft eine elektrische Maschine,
- wobei die elektrische Maschine einen Rotor aufweist, der in Lagern drehbar gelagert ist, so dass der Rotor um eine Rotationsachse rotierbar ist,
- wobei die elektrische Maschine einen Stator aufweist, der den Rotor, bezogen auf die Rotationsachse, radial außen umgibt,
- wobei der Stator aus Statorblechen besteht, die in Richtung der Rotationsachse gesehen aufeinander gestapelt sind.

Derartige elektrische Maschinen sind allgemein bekannt. Insbesondere ist nahezu jede rotatorische elektrische Maschine, deren Rotor als Innenläufer ausgebildet ist, derart aufgebaut.

Die vorliegende Erfindung betrifft weiterhin ein Landfahrzeug,
- wobei das Landfahrzeug Antriebsräder aufweist,
- wobei ein Rotor einer elektrischen Maschine auf mindestens eines der Antriebsräder wirkt,
- wobei eine Rotationsachse des Rotors quer zu einer Fahrrichtung des Landfahrzeugs verläuft.

Auch derartige Landfahrzeuge sind - insbesondere als Schienenfahrzeuge - allgemein bekannt.

Bei Landfahrzeugen werden, sofern sie mittels elektrischer Maschinen angetrieben werden, oftmals Direktantriebe eingesetzt. Aufgrund der niedrigen Drehzahlen eines Direktantriebs und eines oftmals fehlenden Bauraums können keine eigenen Lüfter zur Kühlung verwendet werden. Eine Wasserkühlung ist zwar möglich, verursacht jedoch zusätzliche Kosten. Im Stand der Technik ist daher bekannt, den Stator mit einem Gussgehäuse zu umgeben, dass seinerseits Kühlrippen aufweist. Die im Stator entstehende Verlustwärme wird an das Gehäuse weitergeleitet und dort durch Fahrtwind, Konvektion und Strahlung an die Umgebung abgegeben. Ein Problem dieser Bauweise ist, dass ein geringer Wärmeübergangswiderstand vom Stator zum Gussgehäuse gewährleistet sein muss. Der Sitz muss daher sorgfältig ausgeführt sein. Die Wanddicke des Gehäuses ist entsprechend groß. Aufgrund gusstechnischer Aspekte kann weiterhin eine Mindestdicke der Kühlrippen nicht unterschritten werden. Die Kühlrippen werden dadurch relativ dick und schwer. Darüber hinaus ist die realisierbare Oberfläche der Kühlrippen begrenzt.

Im Stand der Technik sind weiterhin gehäuselose elektrische Maschinen bekannt. Bei derartigen elektrischen Maschinen sind am Stator außen oftmals massive Zugleisten angeordnet. Die Zugleisten verdecken die Statorbleche und oftmals auch vorhandene Kühlrippen in erheblichem Umfang. Sie beeinträchtigen daher die Kühlung.

Aus der IT MI 941 458 A1 ist eine elektrische Maschine der eingangs genannten Art bekannt, bei welcher die Statorbleche, bezogen auf die Rotationsachse, radial außen eine Anzahl von Ausnehmungen aufweisen, die in ihrer Gesamtheit parallel zur Rotationsachse verlaufende Nuten bilden. Aus der IT MI 941 458 A1 geht nicht klar und eindeutig hervor, ob in den Nuten Zugleisten angeordnet sind und ob die Zugleisten an ihren Enden mit Endringen verbunden sind. Die Nuten sind schwalbenschwanzförmig ausgebildet.

Aus der US 2004/0000821 A1 ist ebenfalls eine elektrische Maschine der eingangs genannten Art bekannt. Bei dieser elektrischen Maschine weisen die Statorbleche, bezogen auf die Rotationsachse, radial außen eine Anzahl von Ausnehmungen auf, die in ihrer Gesamtheit parallel zur Rotationsachse verlaufende Nuten bilden. In den Nuten sind Zugleisten angeordnet, die an ihren Enden mit Endringen verbunden sind. Die Statorbleche umfassen erste Statorbleche, die jeweils mindestens eine große Fahne aufweisen, die zwischen den beiden in Umfangsrichtung um die Rotationsachse gesehen an die große Fahne angrenzenden Zugleisten über die beiden angrenzenden Zugleisten hinaus nach radial außen ragt.

Der JP H06 070 452 U ist ein im Wesentlichen gleich gelagerter Offenbarungsgehalt zu entnehmen.

Die Aufgabe der vorliegenden Erfindung besteht darin, Möglichkeiten zu schaffen, eine gehäuselose elektrische Maschine auf einfache Weise effizient mit Luft zu kühlen.

Die Aufgabe wird durch eine elektrische Maschine mit den Merkmalen des Anspruchs 1 gelöst. Vorteilhafte Ausgestaltungen der erfindungsgemäßen elektrischen Maschine sind Gegenstand der abhängigen Ansprüche 2 bis 13.

Erfindungsgemäß wird eine elektrische Maschine der eingangs genannten Art dadurch weiter ausgestaltet,
- dass die Statorbleche, bezogen auf die Rotationsachse, radial außen eine Anzahl von Ausnehmungen aufweisen, die in ihrer Gesamtheit parallel zur Rotationsachse verlaufende Nuten bilden,
- dass in den Nuten Zugleisten angeordnet sind, die an ihren Enden mit Endringen verbunden sind,
- dass die Statorbleche zumindest erste Statorbleche umfassen und
- dass die ersten Statorbleche jeweils mindestens eine große Fahne aufweisen, die zwischen den beiden in Umfangsrichtung um die Rotationsachse gesehen an die große Fahne angrenzenden Zugleisten über die beiden angrenzenden Zugleisten hinaus nach radial außen ragt und dort sich um die Rotationsachse herum erstreckende Ausleger aufweist, welche die beiden angrenzenden Zugleisten übergreifen.

Dadurch ist es zum einen möglich, mittels der ersten Statorbleche Kühlrippen zu realisieren, welche radial zur Rotationsachse gesehen über die Zugleisten hinausragen. Zum anderen werden durch die Ausleger die Zugleisten in radialer Richtung fixiert. Falls auf die elektrische Maschine ein Biegemoment wirkt, können die Zugleisten daher nicht vom Stator abheben. Dadurch nehmen - im Gegensatz zum Stand der Technik - alle Zugleisten einen Teil des Biegemomentes auf. Das von einer einzelnen Zugleiste aufzunehmende Biegemoment ist folglich geringer als im Stand der Technik. Die Zugleisten können daher kleiner dimensioniert werden.

In einer bevorzugten Ausgestaltung der elektrischen Maschine ist vorgesehen, dass die ersten Statorbleche zusätzlich weitere Fahnen aufweisen, die zwischen den beiden in Umfangsrichtung um die Rotationsachse gesehen an die jeweilige weitere Fahne angrenzenden Zugleisten nach radial außen ragen. Durch diese Ausgestaltung ergibt sich eine flexiblere Auslegung der Kühlrippen.

Vorzugsweise ist vorgesehen, dass mindestens eine der weiteren Fahnen über die beiden jeweiligen angrenzenden Zugleisten hinaus nach radial außen ragt. Diese weiteren Fahnen können - nicht aber müssen - analog zur großen Fahne Ausleger aufweisen, die sich um die Rotationsachse herum erstrecken und die beiden angrenzenden Zugleisten übergreifen. Alternativ oder zusätzlich ist es möglich, dass die weiteren Fahnen der ersten Statorbleche unterschiedlich weit nach radial außen ragen. Durch diese Ausgestaltungen kann die Struktur der Kühlrippen auf eine optimale Wärmeabfuhr hin ausgerichtet werden.

Die Anzahl an Zugleisten kann nach Bedarf bestimmt sein. Besonders bevorzugt ist, dass die Anzahl sechs beträgt. Insbesondere können derartige Statorbleche in der Regel unabhängig von der Zahl der Statornuten bei jeder mit Drehstrom gespeisten elektrischen Maschine verwendet werden.

Bereits in dem Fall, dass die Statorbleche ausschließlich die ersten Statorbleche umfassen, ist eine Vielzahl von Auslegungen der elektrischen Maschine mit hocheffizienter Kühlung möglich. Vorzugsweise ist jedoch vorgesehen,
- dass die Statorbleche zusätzlich zu den ersten Statorblechen zweite Statorbleche umfassen,
- dass die zweiten Statorbleche jeweils eine Anzahl von Fahnen aufweisen, die jeweils zwischen den beiden in Umfangsrichtung um die Rotationsachse gesehen an die jeweilige Fahne angrenzenden Zugleisten über die beiden angrenzenden Zugleisten hinaus nach radial außen ragen,
- dass die Fahnen der zweiten Statorbleche jedoch nicht so weit nach radial außen ragen wie die großen Fahnen der ersten Statorbleche und keine sich um die Rotationsachse herum erstreckenden Ausleger aufweisen, welche die beiden jeweils angrenzenden Zugleisten übergreifen.

Das Vorhandensein auch der zweiten Statorbleche ermöglicht eine viel größere Flexibilität beim Design der Kühlrippen. Insbesondere ist es möglich, einen Abstand, den große Fahnen, die in Umfangsrichtung um die Rotationsachse bei der gleichen Tangentialposition angeordnet sind, in Richtung der Rotationsachse voneinander aufweisen, flexibel einzustellen.

Es hat sich als vorteilhaft erwiesen, wenn die Fahnen der zweiten Statorbleche unterschiedlich weit nach radial außen ragen.

In aller Regel ist die Anzahl an Fahnen der zweiten Statorbleche gleich der Anzahl an Fahnen der ersten Statorbleche.

Mittels der ersten und zweiten Statorbleche ergibt sich in aller Regel eine bei weitem hinreichende Flexibilität beim Design des Stators. Es ist also möglich, dass die Statorbleche keine weiteren Statorbleche umfassen.

Der Querschnitt der Zugleisten kann nach Bedarf bestimmt sein. Vorzugsweise weisen die Zugleisten einen rechteckigen oder trapezförmigen Querschnitt auf. Dies ermöglicht einen relativ leichten und stabilen, aber dennoch kostengünstigen Aufbau. Dies gilt ganz besonders, wenn, bezogen auf die Rotationsachse, die Breitseiten des rechteckigen Querschnitts bzw. die parallelen Seiten des trapezförmigen Querschnitts in Umfangsrichtung gerichtet sind, die anderen Seiten radial.

Vorzugsweise ist vorgesehen, dass die Statorbleche zu Gruppen von in Richtung der Rotationsachse gesehen unmittelbar aufeinanderfolgenden Statorblechen zusammengefasst sind, wobei die Gruppen jeweils eine einheitliche Gruppenkontur aufweisen und die Gruppenkontur von Gruppe von Statorblechen zu Gruppe von Statorblechen variiert. Dadurch ist eine gute Kühlwirkung bei guter mechanischer Stabilität der Fahnen gewährleistet, ohne die elektrischen Eigenschaften der elektrischen Maschine negativ zu beeinflussen.

Die Anzahl an Statorblechen pro Gruppe kann nach Bedarf bestimmt sein. In der Regel liegt die Anzahl an Statorblechen pro Gruppe zwischen 4 und 10. In gleicher Weise kann eine in Richtung der Rotationsachse gesehene Dicke der Gruppen nach Bedarf bestimmt sein. In der Regel liegt die Dicke zwischen 2,5 mm und 6,0 mm, beispielsweise zwischen 3,5 mm und 5,0 mm.

In einer besonders bevorzugten Ausgestaltung der vorliegenden Erfindung ist vorgesehen, dass in Richtung der Rotationsachse gesehen die Gruppen von Statorblechen in der Mitte in einer ersten Sequenz aufeinander folgen und in die Mitte beidseitig begrenzenden Randbereichen in einer von der ersten Sequenz verschiedenen zweiten Sequenz aufeinander folgen. Dadurch ist es möglich, die elektrische Maschine in der Mitte anderweitig zu optimieren als an den Rändern.

Die Aufgabe wird weiterhin durch ein Landfahrzeug mit den Merkmalen des Anspruchs 14 gelöst. Vorteilhafte Ausgestaltungen des erfindungsgemäßen Landfahrzeugs sind Gegenstand der abhängigen Ansprüche 15 und 16.

Erfindungsgemäß wird ein Landfahrzeug der eingangs genannten Art dadurch weiter ausgestaltet,
- dass die elektrische Maschine als erfindungsgemäße elektrische Maschine ausgebildet ist und
- dass die großen Fahnen der ersten Statorbleche derart angeordnet sind, dass sie nicht nach unten ragen.

Durch diese Ausgestaltung kann insbesondere eine gute Kühlwirkung auch dann erzielt werden, wenn aus Gründen geringer Bodenfreiheit im unteren Bereich keine Kühlrippen angeordnet sein können.

Je nach Bedarf ist es möglich, dass die großen Fahnen der ersten Statorbleche derart angeordnet sind, dass sie auch nicht nach oben ragen. Durch diese Ausgestaltung kann die vertikale Bauhöhe der elektrischen Maschine minimiert werden.

Das Landfahrzeug kann nach Bedarf ausgebildet sein. Insbesondere ist es jedoch möglich, dass die Antriebsräder als Laufräder eines Schienenfahrzeugs ausgebildet sind. In diesem Fall findet das Landfahrzeug insbesondere im öffentlichen Personennahverkehr Verwendung. Beispielsweise kann das Landfahrzeug als U-Bahn oder als Straßenbahn ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine elektrische Maschine in perspektivische Ansicht,
- FIG 2: einen Längsschnitt durch die elektrische Maschine von FIG 1,
- FIG 3: einen Querschnitt durch die elektrische Maschine von FIG 1,
- FIG 4: ein einzelnes erstes Statorblech,
- FIG 5: ein einzelnes zweites Statorblech,
- FIG 6: mögliche Orientierungen von ersten Statorblechen,
- FIG 7: eine mögliche erste Sequenz von ersten und zweiten Statorblechen,
- FIG 8 bis 11: zugehörige Geometrien von Kühlrippen,
- FIG 12: eine mögliche zweite Sequenz von ersten und zweiten Statorblechen,
- FIG 13: mögliche Orientierungen von zweiten Statorblechen,
- FIG 14: weitere mögliche Orientierungen von ersten Statorblechen,
- FIG 15: eine Seitenansicht einer elektrischen Maschine und
- FIG 16: ein Landfahrzeug.

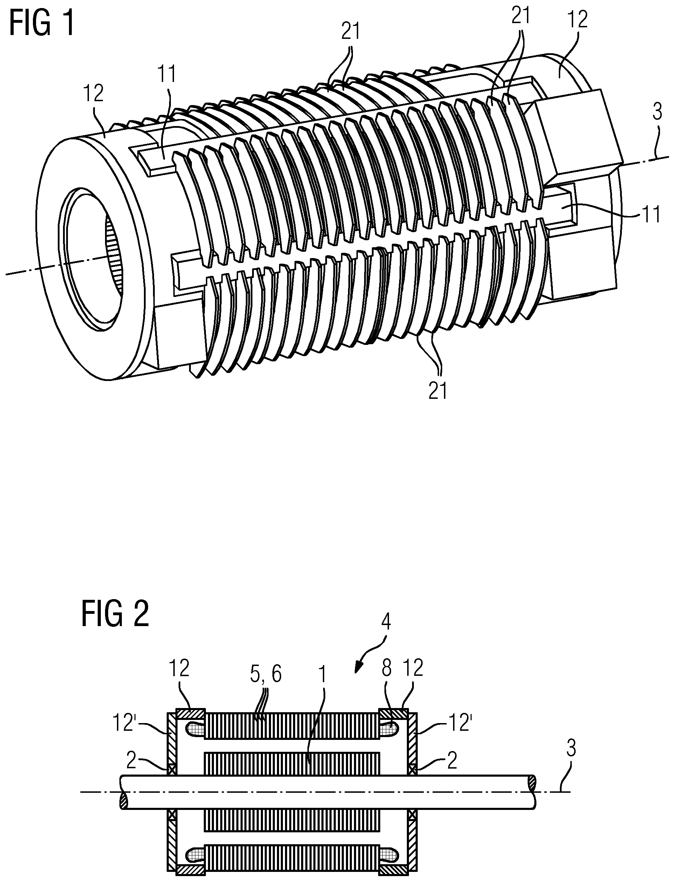

Gemäß den FIG 1 bis 3 weist eine elektrische Maschine einen Rotor 1 auf. Der Rotor 1 ist in Lagern 2 drehbar gelagert. Der Rotor 1 ist dadurch um eine Rotationsachse 3 rotierbar.

Soweit nachfolgend die Begriffe "axial", "radial" und "tangential" verwendet werden, sind sie stets auf die Rotationsachse 3 bezogen. Axial ist eine Richtung, die parallel zur Rotationsachse 3 gerichtet ist. Radial ist eine Richtung, die orthogonal zur Rotationsachse 3 verläuft, das heißt direkt auf die Rotationsachse 3 zu oder von ihr weg. Tangential ist eine Richtung, die sowohl zur Axialrichtung als auch zur Radialrichtung orthogonal ist. Tangential ist also eine Richtung, die in konstantem Radialabstand von der Rotationsachse 3 kreisförmig um die Rotationsachse 3 herum gerichtet ist.

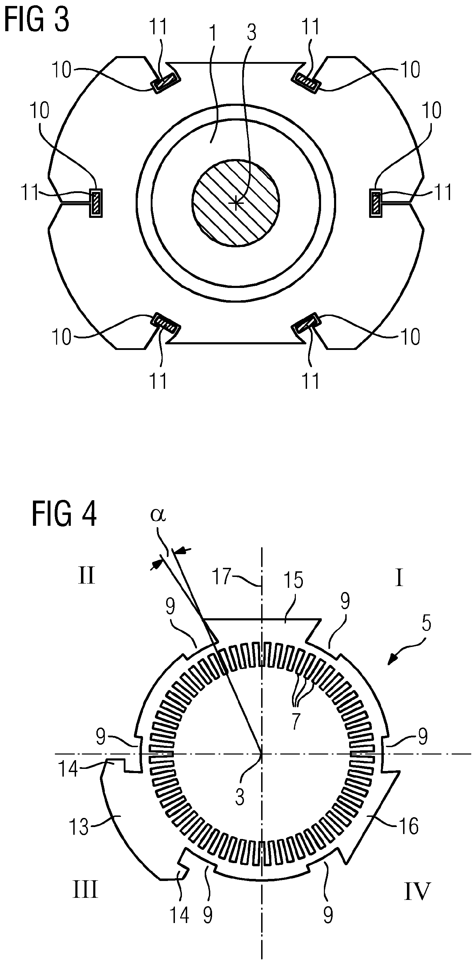

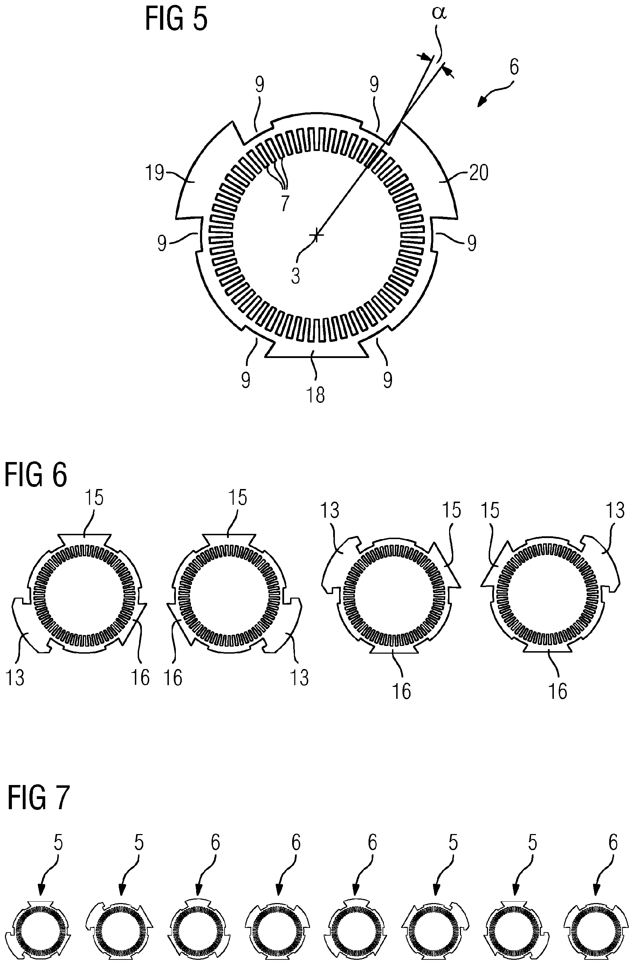

Die elektrische Maschine weist weiterhin einen Stator 4 auf. Der Stator 4 umgibt den Rotor 1 radial außen. Der Stator 4 besteht aus Statorblechen 5, 6. Die Statorbleche 5, 6 sind in Axialrichtung gesehen aufeinander gestapelt. Die Statorbleche 5, 6 weisen gemäß den FIG 4 und 5 an ihrer dem Rotor 1 zugewandten Seite (also radial innen) Zähne 7 auf, die auf den Rotor 1 zu ragen. Zwischen den Zähnen 7 ist eine Statorwicklung 8 angeordnet. Von der Statorwicklung 8 sind nur in FIG 2 die Wicklungsköpfe sichtbar. Radial außen weisen die Statorbleche 5, 6 eine Anzahl von Ausnehmungen 9 auf. Die Ausnehmungen 9 bilden in ihrer Gesamtheit (also axial über die gesamte Länge des Stators 4 gesehen) axial verlaufende Nuten 10. In den Nuten 10 sind Zugleisten 11 angeordnet. Die Zugleisten 11 sind an ihren Enden mit Endringen 12 verbunden. Mittels der Zugleisten 11 und der Endringe 12 wird der Stator 4 zusammengehalten. Die Verbindung der Zugleisten 11 und der Endringe 12 miteinander kann nach Bedarf sein. Beispielsweise können die Zugleisten 11 mit den Endringen 12 verschweißt sein. Die Zugleisten 11 weisen vorzugsweise einen rechteckigen oder trapezförmigen Querschnitt auf. An die Endringe 12 sind axial außen in der Regel Lagerschilde 12' angesetzt, in welchen die Lager 2 angeordnet sind.

Die Statorbleche 5, 6 umfassen zumindest erste Statorbleche 5. Die ersten Statorbleche 5 weisen untereinander denselben Blechzuschnitt auf. Ein einzelnes erstes Statorblech 5 ist in FIG 4 dargestellt. Gemäß FIG 4 weist das dargestellte erste Statorblech 5 eine große Fahne 13 auf. Die große Fahne 13 erstreckt sich in Tangentialrichtung zwischen den beiden tangential angrenzenden Zugleisten 11. Die große Fahne 13 ragt über diese beiden Zugleisten 11 hinaus nach radial außen. In dem diese beiden Zugleisten 11 überragenden Bereich weist die große Fahne 13 Ausleger 14 auf, die sich tangential erstrecken und diese beiden Zugleisten 11 radial außen übergreifen.

Gemäß FIG 4 weisen die ersten Statorbleche 5 jeweils eine einzige große Fahne 13 auf. In manchen Fällen kann es jedoch sinnvoll sein, wenn die ersten Statorbleche 5 mehr als eine große Fahne 13 aufweisen. In manchen Ausgestaltungen der elektrischen Maschine ist es weiterhin ausreichend, dass die ersten Statorbleche 5 ausschließlich die große Fahne 13 bzw. die großen Fahnen 13 aufweisen, aber keine weiteren Fahnen 15, 16 aufweisen. Oftmals sind diese weiteren Fahnen 15, 16 jedoch vorhanden. In diesem Fall erstrecken sich die weiteren Fahnen 15, 16 in Tangentialrichtung zwischen den beiden jeweils tangential angrenzenden Zugleisten 11, jedoch nicht so weit wie die große Fahne 13 bzw. die großen Fahnen 13. Weiterhin ragen auch die weiteren Fahnen 15, 16 zwischen den beiden jeweils angrenzenden Zugleisten 11 nach radial außen. Die weiteren Fahnen 15, 16 weisen gemäß FIG 4 - im Gegensatz zur großen Fahne 13 - keine Ausleger auf, welche die beiden jeweils angrenzenden Zugleisten 11 radial außen übergreifen. Weiterhin sind die weiteren Fahnen 15, 16, bezogen auf die Rotationsachse 3, radial außen vorzugsweise durch Sekanten begrenzt. Dies steht im Gegensatz zur großen Fahne 13, die, bezogen auf die Rotationsachse 3, radial außen vorzugsweise (evtl. mit Ausnahme ihrer tangentialen Endbereiche) von einem Kreisbogen begrenzt ist. Je nach Lage des Einzelfalls können die weiteren Fahnen 15, 16 radial außen alternativ zu einer Sekante von einem Kreisbogen begrenzt sein.

Es ist möglich, dass die weiteren Fahnen 15, 16 der ersten Statorbleche 5 in Radialrichtung gesehen nicht über die beiden jeweils angrenzenden Zugleisten 11 hinaus nach radial außen ragen. Alternativ ist es möglich, dass mindestens eine der weiteren Fahnen 15, 16 in Radialrichtung gesehen über die beiden jeweils angrenzenden Zugleisten 11 hinaus nach radial außen ragt. In diesem Fall können auch die entsprechenden weiteren Fahnen 15, 16 analog zur großen Fahne 13 Ausleger aufweisen. Es ist weiterhin möglich, dass die weiteren Fahnen 15, 16 der ersten Statorbleche 5 gleich weit nach radial außen ragen. Vorzugsweise ragen die weiteren Fahnen 15, 16 der ersten Statorbleche 5 jedoch entsprechend der Darstellung in FIG 4 unterschiedlich weit nach radial außen.

Gemäß FIG 4 verlaufen die weiteren Fahnen 15, 16 in Tangentialrichtung um die Rotationsachse 3 herum gesehen leicht konisch. Die Kanten bilden also mit der Radialrichtung einen Winkel α, der zwar klein ist, aber von 0 verschieden ist. Der Winkel α kann beispielsweise zwischen 2° und 5° liegen. Aufgrund des Winkels α können die an die weiteren Fahnen 15, 16 angrenzenden Ausnehmungen 9 nach radial außen einen parallelen Querschnitt aufweisen oder sich verjüngen. Alternativ können die Kanten der weiteren Fahnen 15, 16 rein radial verlaufen. Die Kanten der großen Fahne 13 weisen - unabhängig davon, ob die Kanten der weiteren Fahnen 15, 16 rein radial oder leicht konisch verlaufen - vorzugsweise den gleichen Verlauf auf wie die Kanten der weiteren Fahnen 15, 16. In Bezug auf die große Fahne 13 kann - nicht aber muss - die gleiche Konizität bestehen.

Gemäß FIG 4 beträgt die Anzahl an Zugleisten 11 sechs. Dies ist eine bevorzugte Ausgestaltung. Es sind jedoch auch Gestaltungen mit mehr oder weniger als sechs Zugleisten 11 möglich.

Es ist möglich, dass die Statorbleche 5, 6 ausschließlich die ersten Statorbleche 5, aber keine weiteren Statorbleche umfassen. In diesem Fall können die ersten Statorbleche 5 beispielsweise so gestapelt sein, wie dies nachfolgend in Verbindung mit FIG 6 näher erläutert wird.

Im Rahmen von FIG 6 werden die ersten Statorbleche 5 in vier verschiedenen Orientierungen gestapelt, nämlich
- in einer Grundorientierung, die in FIG 6 links und auch in FIG 4 dargestellt ist;
- in einer ersten einfach gedrehten Orientierung, bei welcher das entsprechende erste Statorblech 5, bezogen auf die Grundorientierung, um 180° um eine vertikale Achse 17 (siehe FIG 4) gedreht ist; diese Lage ist in FIG 6 rechts neben der ersten einfach gedrehten Orientierung dargestellt;
- in einer zweiten einfach gedrehten Orientierung, bei welcher das entsprechende erste Statorblech 5, bezogen auf die Grundorientierung, um 60° im Uhrzeigersinn um die Rotationsachse 3 gedreht ist; diese Lage ist in FIG 6 rechts neben der ersten einfach gedrehten Orientierung dargestellt;
- in einer zweifach gedrehten Orientierung, bei welcher das entsprechende erste Statorblech 5, bezogen auf die Grundorientierung, zuerst um 60° im Uhrzeigersinn um die Rotationsachse 3 und sodann um 180° um eine vertikale Achse 17 gedreht ist; diese Lage ist in FIG 6 ganz rechts dargestellt.

Die Reihenfolge, in der die Orientierungen aufeinanderfolgen, kann nach Bedarf bestimmt sein. Im einfachsten Fall ist die Abfolge Grundorientierung - erste einfach gedrehte Orientierung - zweite einfach gedrehte Orientierung - zweifach gedrehte Orientierung. Alternativ ist beispielsweise die Abfolge Grundorientierung - zweite einfach gedrehte Orientierung - erste einfach gedrehte Orientierung - zweifach gedrehte Orientierung möglich. Je nach Lage des Einzelfalls sind auch andere Abfolgen und auch andere Orientierungen der ersten Statorbleche 5 möglich.

Die Statorbleche 5, 6 weisen (in Axialrichtung gesehen) in der Regel eine relativ geringe Dicke auf. Meist liegt die Dicke eines einzelnen Statorbleche 5, 6 unter 1 mm. Zur Erhöhung der Stabilität insbesondere der großen Fahnen 13 sind daher die ersten Statorbleche 5 im Rahmen der Stapelung meist zu Gruppen zusammengefasst. Es weisen also jeweils mehrere erste Statorbleche 5, die in Axialrichtung unmittelbar aufeinanderfolgen, die gleiche Orientierung und damit auch die gleiche Kontur auf - nachfolgend als Gruppenkontur bezeichnet. Von Gruppe zu Gruppe von ersten Statorblechen 5 variiert die Gruppenkontur jedoch jeweils. Die obenstehend in Verbindung mit FIG 6 erwähnten Orientierungen (oder auch andere Orientierungen) gelten also vorzugsweise jeweils nicht für ein einzelnes erstes Statorblech 5, sondern für die jeweilige Gruppe von ersten Statorblechen 5.

Die Anzahl an ersten Statorblechen 5 pro Gruppe kann nach Bedarf bestimmt sein. In der Regel liegt sie zwischen vier und zehn, beispielsweise bei fünf bis acht. Insbesondere kann sie bei sechs liegen. Aufgrund der Gruppenbildung weisen die Gruppen (in Axialrichtung) eine größere Dicke auf als ein einzelnes erstes Statorblech 5. Die Dicke der Gruppen liegt in der Regel zwischen 2,5 mm und 6,0 mm, beispielsweise zwischen 3,0 mm und 5,0 mm. Insbesondere kann sie zwischen 3,5 mm und 4,0 mm liegen.

Es ist möglich, dass außer den ersten Statorblechen 5 keine weiteren Statorbleche 5, 6 vorhanden sind. Vorzugsweise umfassen die Statorbleche 5, 6 jedoch zusätzlich zu den ersten Statorblechen 5 zweite Statorbleche 6. Die zweiten Statorbleche 6 weisen untereinander denselben Blechzuschnitt auf. Ein einzelnes zweites Statorblech 6 ist in FIG 5 dargestellt. Gemäß FIG 5 weist das zweite Statorblech 6 eine Anzahl von Fahnen 18, 19, 20 auf. Die Fahnen 18, 19, 20 des zweiten Statorblechs 6 erstrecken sich in Tangentialrichtung zwischen den beiden jeweils tangential angrenzenden Zugleisten 11. Weiterhin ragen auch die Fahnen 18, 19, 20 des zweiten Statorblechs 6 zwischen den beiden jeweils angrenzenden Zugleisten 11 nach radial außen. Die Fahnen 18, 19, 20 des zweiten Statorblechs 6 ragen jedoch nicht so weit nach radial außen wie die großen Fahnen 13 der ersten Statorbleche 5. Auch weisen die Fahnen 18, 19, 20 des zweiten Statorblechs 6 - analog zu den weiteren Fahnen 15, 16 der ersten Statorbleche 5 - keine Ausleger auf, welche die beiden jeweils angrenzenden Zugleisten 11 übergreifen.

Gemäß FIG 5 beträgt die Anzahl an Fahnen 18, 19, 20 des zweiten Statorblechs 6 drei. Die Anzahl an Fahnen 18, 19, 20 des zweiten Statorblechs 6 ist also gleich der Anzahl an Fahnen 13, 15, 16 des ersten Statorblechs 5. Diese Ausgestaltung ist in der Regel - aber nicht unbedingt zwingend - gegeben.

Es ist möglich, dass die Fahnen 18, 19, 20 des zweiten Statorblechs 6 alle gleich groß sind. Vorzugsweise jedoch ragen die Fahnen 18, 19, 20 des zweiten Statorblechs 6 unterschiedlich weit nach radial außen. Einige der Fahnen 18, 19, 20 des zweiten Statorblechs 6 können zwar eine einheitliche Radialerstreckung aufweisen, mindestens eine der Fahnen 18, 19, 20 des zweiten Statorblechs 6 ist jedoch größer oder - wie in FIG 5 dargestellt - kleiner als die anderen Fahnen 19, 20 des zweiten Statorblechs 6. Die kleineren der Fahnen 18, 19, 20 der zweiten Statorbleche 6 sind - bezogen auf die Rotationsachse 3 - radial außen vorzugsweise durch Sekanten begrenzt. Dies steht im Gegensatz zu den größeren der Fahnen 18, 19, 20 der zweiten Statorbleche 6, die - bezogen auf die Rotationsachse 3 - radial außen vorzugsweise von einem Kreisbogen begrenzt sind. Je nach Lage des Einzelfalls können die kleineren der Fahnen 18, 19, 20 radial außen alternativ zu einer Sekante ebenfalls von einem Kreisbogen begrenzt sein.

Es ist möglich, dass die Fahnen 18, 19, 20 des zweiten Statorblechs 6 in Radialrichtung gesehen nicht über die beiden jeweils angrenzenden Zugleisten 11 hinaus nach radial außen ragen. Alternativ ist es möglich, dass mindestens eine der Fahnen 18, 19, 20 des zweiten Statorblechs 6 in Radialrichtung gesehen über die beiden jeweils angrenzenden Zugleisten 11 hinaus nach radial außen ragt.

Gemäß FIG 5 verlaufen die Fahnen 18, 19, 20 des zweiten Statorblechs 6 - analog zu den weiteren Fahnen 15, 16 der ersten Statorbleche 5 - in Tangentialrichtung um die Rotationsachse 3 herum gesehen leicht konisch. Die Kanten bilden also mit der Radialrichtung den Winkel α. Aufgrund des Winkels α verjüngen sich die an die Fahnen 18, 19, 20 des zweiten Statorblechs 6 angrenzenden Ausnehmungen 9 nach radial außen oder weisen einen parallelen Querschnitt auf. Alternativ können die Kanten der Fahnen 18, 19, 20 der zweiten Statorbleche 6 analog zu den weiteren Fahnen 15, 16 des ersten Statorblechs 5 rein radial verlaufen.

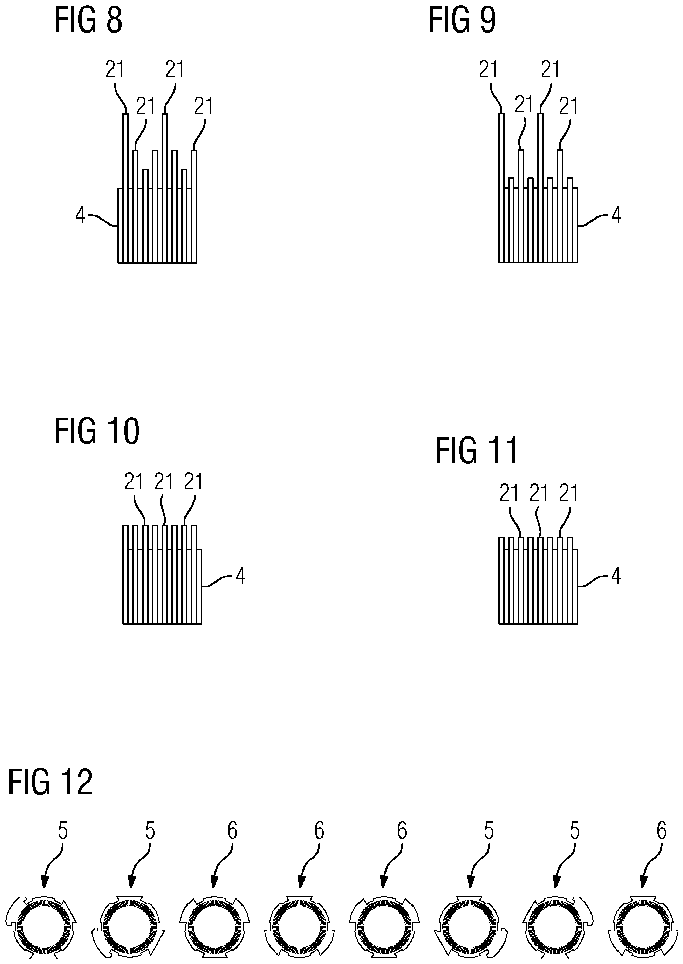

Insbesondere wenn die Statorbleche 5, 6 sowohl die ersten Statorbleche 5 als auch die zweiten Statorbleche 6 umfassen, ist es nicht erforderlich, dass die Statorbleche 5, 6 weitere Statorbleche umfassen. Denn durch das Vorhandensein sowohl der ersten als auch der zweiten Statorbleche 5, 6 ergibt sich eine große Flexibilität bei der Gestaltung von Kühlrippen 21. Nachfolgend wird zunächst in Verbindung mit den FIG 7 bis 11 eine erste mögliche Sequenz von ersten und zweiten Statorblechen 5, 6 erläutert, sodann in Verbindung mit FIG 12 eine zweite mögliche Sequenz von ersten und zweiten Statorblechen 5, 6. Unabhängig davon, ob eine der beiden in Verbindung mit den FIG 7 bis 12 erläuterten Sequenzen oder eine andere Sequenz realisiert wird, gilt jedoch auch für die Sequenzen von ersten und zweiten Statorblechen 5, 6 - wie zuvor für Sequenzen von (ausschließlich) ersten Statorblechen 5 -, dass zur Erhöhung der Stabilität der gebildeten Kühlrippen 21 die ersten und zweiten Statorbleche 5, 6 im Rahmen der Stapelung meist zu Gruppen zusammengefasst sind. Die obigen Ausführungen zur Gruppenbildung einschließlich der bevorzugten Anzahl von Statorblechen 5, 6 und zur bevorzugten Dicke der gebildeten Gruppen gelten daher auch für die in Verbindung mit den FIG 7 bis 12 beschriebene Ausgestaltungen.

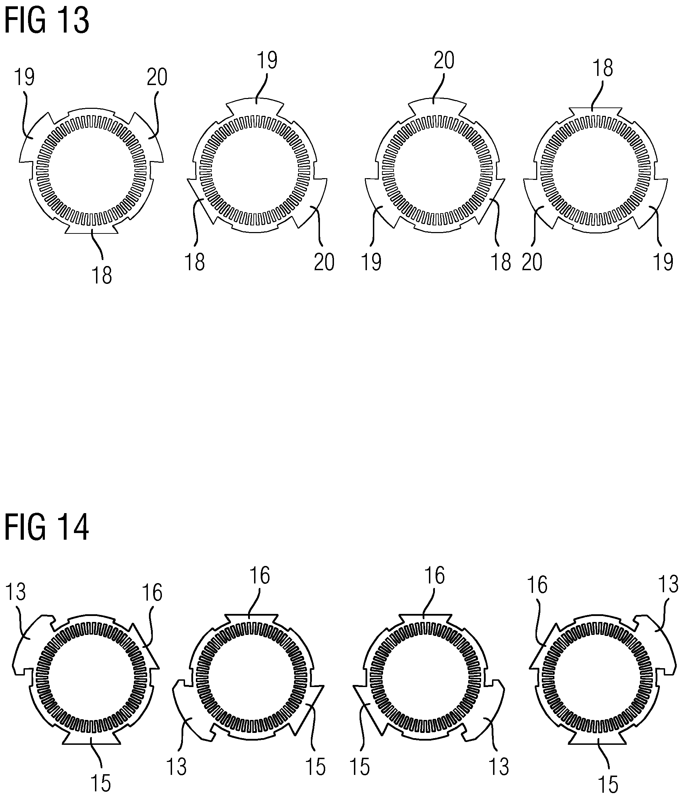

Im Rahmen der FIG 7 bis 11 werden bezüglich der ersten Statorbleche 5 die obenstehend in Verbindung mit FIG 4 bereits erläuterten Orientierungen (Grundorientierung - erste einfach gedrehte Orientierung - zweite einfach gedrehte Orientierung - zweifach gedrehte Orientierung) benötigt. Bezüglich der zweiten Statorbleche 6 werden drei Orientierungen benötigt, die in FIG 13 dargestellt sind und nachfolgend als Grundorientierung, als erste gedrehte Orientierung und als zweite gedrehte Orientierung bezeichnet werden.
- In der Grundorientierung, die in FIG 13 links und auch in FIG 6 dargestellt ist, zeigt die kleine Fahne 18 des zweiten Statorblechs 6 nach unten.
- In der ersten gedrehten Orientierung ist das entsprechende zweite Statorblech 6, bezogen auf die Grundorientierung, um 60° im Uhrzeigersinn um die Rotationsachse 3 gedreht. Diese Orientierung ist in FIG 13 rechts neben der Grundorientierung dargestellt.

- In der zweiten gedrehten Orientierung ist das entsprechende zweite Statorblech 6, bezogen auf die Grundorientierung, um 60° entgegen dem Uhrzeigersinn um die Rotationsachse 3 gedreht. Diese Orientierung ist in FIG 13 rechts neben der ersten gedrehten Orientierung dargestellt.

FIG 7 zeigt die Abfolge von ersten und zweiten Statorblechen 5, 6 gemäß der ersten Sequenz. Die ersten und zweiten Statorbleche 5, 6 (bzw. die entsprechenden Gruppen) folgen gemäß nachstehender Folge von Orientierungen aufeinander:
- erstes Statorblech 5 in der Grundorientierung,
- erstes Statorblech 5 in der zweiten einfach gedrehten Orientierung,
- zweites Statorblech 6 in der ersten gedrehten Orientierung,
- zweites Statorblech 6 in der Grundorientierung,
- zweites Statorblech 6 in der zweiten gedrehten Orientierung,
- erstes Statorblech 5 in der zweifach gedrehten Orientierung,
- erstes Statorblech 5 in der ersten einfach gedrehten Orientierung,
- zweites Statorblech 6 in der Grundorientierung,

Mit dieser Sequenz von ersten und zweiten Statorblechen 5, 6 bildet sich, bezogen auf das in FIG 4 eingezeichnete Koordinatenkreuz, in den beiden mit I und II bezeichneten Quadranten ein Muster an Kühlrippen 21 aus, wie es in FIG 8 dargestellt ist. In den beiden mit III und IV bezeichneten Quadranten bildet sich ein Muster an Kühlrippen 21 aus, wie es in FIG 9 dargestellt ist. In dem Übergangsbereich von Quadrant I zu Quadrant II bildet sich ein Muster an Kühlrippen 21 aus, wie es in FIG 10 dargestellt ist. In dem Übergangsbereich von Quadrant III zu Quadrant IV bildet sich ein Muster an Kühlrippen 21 aus, wie es in FIG 11 dargestellt ist.

Für die in FIG 12 dargestellte Abfolge von ersten und zweiten Statorblechen 5, 6 gemäß der zweiten Sequenz werden vier weitere Orientierungen des ersten Statorblechs 5 benötigt. Diese Orientierungen sind in FIG 14 dargestellt und werden nachfolgend, ausgehend von der bereits erläuterten Grundorientierung des ersten Statorblechs 5, wie folgt bezeichnet und definiert:
- Orientierung A: Das erste Statorblech 5 wird sowohl um die Rotationsachse 3 als auch um die vertikale Achse 17 um jeweils 180° gedreht. Die Reihenfolge der beiden Drehungen ist irrelevant. Diese Orientierung ist in FIG 14 links außen dargestellt.
- Orientierung B: Das erste Statorblech 5 wird zunächst um 180° um die vertikale Achse 17 gedreht, danach um 120° im Uhrzeigersinn um die Rotationsachse 3. Diese Orientierung ist in FIG 14 als zweite von links dargestellt.
- Orientierung C: Das erste Statorblech 5 wird entgegen dem Uhrzeigersinn um 120° um die Rotationsachse 3 gedreht. Diese Orientierung ist in FIG 14 als dritte von links dargestellt.
- Orientierung D: Das erste Statorblech 5 wird um 180° um die Rotationsachse 3 gedreht. Diese Orientierung ist in FIG 14 rechts außen dargestellt.

Weiterhin wird eine zusätzliche Orientierung der zweiten Statorbleche 6 benötigt, nachfolgend als dritte gedrehte Orientierung bezeichnet. In der dritten gedrehten Orientierung ist das entsprechende zweite Statorblech 6, bezogen auf die Grundorientierung, um 180° um die Rotationsachse 3 gedreht. Diese Orientierung ist in FIG 13 rechts außen dargestellt.

Im Rahmen der Abfolge von FIG 12 folgen die ersten und zweiten Statorbleche 5, 6 (bzw. die entsprechenden Gruppen) wie nachstehend erläutert aufeinander:
- erstes Statorblech 5 in der Orientierung A,
- erstes Statorblech 5 in der Orientierung B,
- zweites Statorblech 6 in der Grundorientierung,
- zweites Statorblech 6 in der dritten gedrehten Orientierung,
- zweites Statorblech 6 in der Grundorientierung,
- erstes Statorblech 5 in der Orientierung C,
- erstes Statorblech 5 in der Orientierung D,
- zweites Statorblech 6 in der dritten gedrehten Orientierung.

Mit dieser Sequenz von ersten und zweiten Statorblechen 5, 6 bildet sich ein anderes Muster an Kühlrippen 21 aus. Sowohl bei der Sequenz gemäß FIG 7 als auch bei der Sequenz gemäß FIG 12 sind jedoch sowohl oben (also im Übergangsbereich vom Quadranten I zum Quadranten II) als auch unten (also im Übergangsbereich vom Quadranten III zum Quadranten IV) keine großen Fahnen 13 der ersten Statorbleche 5 angeordnet.

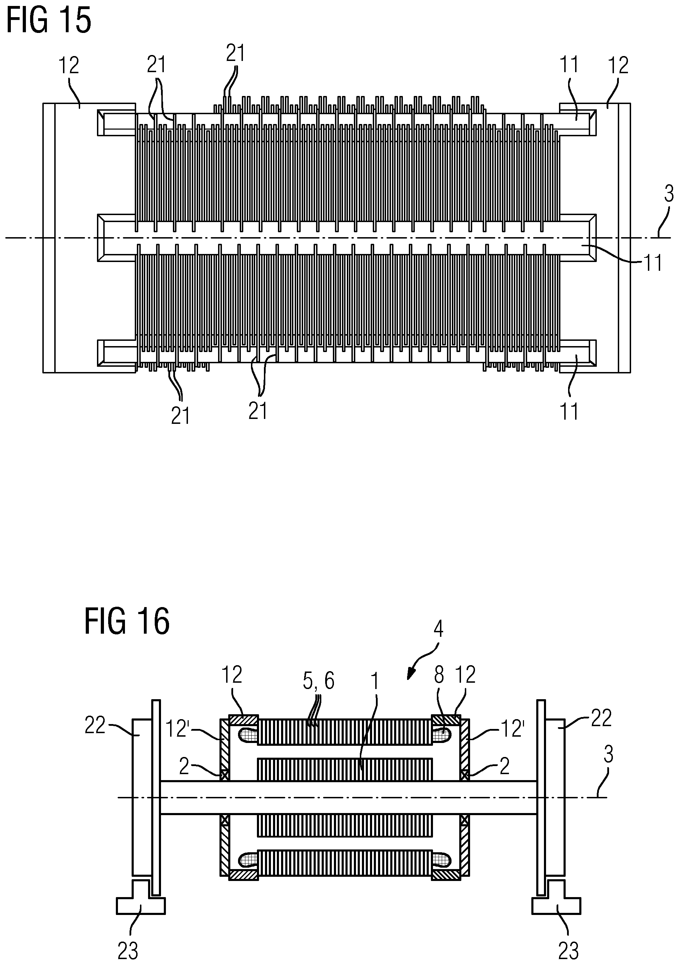

In vielen Fällen wird es ausreichen, im Rahmen der Stapelung von ersten und zweiten Statorblechen 5, 6 ausschließlich die Stapelung gemäß FIG 7 oder ausschließlich die Stapelung gemäß FIG 12 zu verwenden. In manchen Fällen kann es jedoch sinnvoll sein, gemäß FIG 15 in Axialrichtung gesehen in der Mitte der elektrischen Maschine einerseits und in die Mitte beidseitig begrenzenden Randbereichen unterschiedliche Sequenzen aufeinanderfolgen zu lassen. Beispielsweise kann in der Mitte die erste, obenstehend in Verbindung mit FIG 7 erläuterte Sequenz verwendet werden, in den Randbereichen die zweite, obenstehend in Verbindung mit FIG 12 erläuterte Sequenz. Die Randbereiche können sich in Axialrichtung gesehen nach Bedarf - beispielsweise jeweils über die äußeren 10 % bis 25 % - der Länge des Stators 4 erstrecken.

Die erfindungsgemäße elektrische Maschine ist vom Ansatz her universell einsetzbar. Beispielsweise kann sie entsprechend der Darstellung in FIG 16 zum Antreiben eines Landfahrzeugs verwendet werden. Das Landfahrzeug weist in diesem Fall Antriebsräder 22 auf, wobei der Rotor 1 der erfindungsgemäßen elektrischen Maschine auf mindestens eines - unter Umständen auch zwei - der Antriebsräder 22 wirkt. Der Rotor 1 kann insbesondere direkt (d.h. ohne zwischengeschaltetes Getriebe) auf das mindestens eine Antriebsrad 22 wirken. Die Rotationsachse 3 verläuft entsprechend der Darstellung in FIG 14 quer zu einer Fahrtrichtung des Landfahrzeugs. In der Regel verläuft die Rotationsachse 3 weiterhin parallel zum Untergrund des Landfahrzeugs, zumeist also horizontal. Insbesondere die großen Fahnen 13 der ersten Statorbleche 5 sind bei der in dem Landfahrzeug verwendeten elektrischen Maschine vorzugsweise so orientiert, wie dies obenstehend in Verbindung mit den FIG 6, 7 und 12 erläutert wurde. Die großen Fahnen 13 der ersten Statorbleche 5 ragen damit insbesondere nicht nach unten und nach oben. Unter Umständen kann eine Sequenz von ersten Statorblechen 5 oder von ersten Statorblechen 5 und zweiten Statorblechen 6 gewählt sein, bei welcher die großen Fahnen 13 der ersten Statorbleche 5 nach oben ragen. Zumindest nach unten sollten die großen Fahnen 13 der ersten Statorbleche 5 jedoch nicht ragen.

Das Landfahrzeug kann im Übrigen nach Bedarf ausgebildet sein, beispielsweise als Elektroauto. Vorzugsweise ist das Landfahrzeug jedoch als Schienenfahrzeug ausgebildet. Die Antriebsräder 22 sind daher vorzugsweise als Laufräder eines Schienenfahrzeugs ausgebildet, die im Betrieb des Schienenfahrzeugs auf Schienen 23 abrollen.

Die vorliegende Erfindung weist viele Vorteile auf. Insbesondere kann auf einfache Weise eine leicht kühlbare, mechanisch stabile elektrische Maschine geschaffen werden, die ein relativ geringes Gewicht aufweist. Die Oberfläche der Kühlrippen 21 kann maximiert werden. Die Stanzkosten und die Werkzeugkosten sind gegenüber herkömmlichen elektrischen Maschinen kaum erhöht, da auch im ungünstigsten Fall nur zwei verschiedene Statorbleche 5, 6 benötigt werden. Der verfügbare Bauraum kann gut ausgenutzt werden. Die Abfolge der Kühlrippen 21 und deren axialer Abstand voneinander kann - insbesondere durch die beiden in Verbindung mit den FIG 7 und 12 erläuterten Sequenzen von Statorblechen 5, 6 - derart ausgelegt werden, dass sowohl im Stillstand durch Konvektion als auch durch Fahrtwind eine effiziente Kühlung möglich ist.

Gegenüber einer elektrischen Maschine mit Gussgehäuse sind erhebliche Verbesserungen erzielbar. So kann beispielsweise eine um ca. 50 % größere Oberfläche realisiert werden. Weiterhin konnte im Gesamtergebnis eine Gewichtsersparnis von ca. 10 % erreicht werden. Weiterhin entfällt der Wärmeübergangswiderstand zwischen Stator 4 und Gussgehäuse. Die Baulänge der elektrischen Maschine (in Axialrichtung) konnte bei unveränderten Abmessungen in Radialrichtung um rund 13 % reduziert werden. Auch ein um ca. 10 % verringerter Temperaturhub im Fahrbetrieb konnte erreicht werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine einen Rotor (1) aufweist, der in Lagern (2) drehbar gelagert ist, so dass der Rotor (1) um eine Rotationsachse (3) rotierbar ist,
- wobei die elektrische Maschine einen Stator (4) aufweist, der den Rotor (1), bezogen auf die Rotationsachse (3), radial außen umgibt,
- wobei der Stator (4) aus Statorblechen (5,6) besteht, die in Richtung der Rotationsachse (3) gesehen aufeinander gestapelt sind,
- wobei die Statorbleche (5,6), bezogen auf die Rotationsachse (3), radial außen eine Anzahl von Ausnehmungen (9) aufweisen, die in ihrer Gesamtheit parallel zur Rotationsachse (3) verlaufende Nuten (10) bilden,
- wobei in den Nuten (10) Zugleisten (11) angeordnet sind, die an ihren Enden mit Endringen (12) verbunden sind,
- wobei die Statorbleche (5,6) zumindest erste Statorbleche (5) umfassen,
- **dadurch gekennzeichnet, dass** die ersten Statorbleche (5) jeweils mindestens eine große Fahne (13) aufweisen, die zwischen den beiden in Umfangsrichtung um die Rotationsachse (3) gesehen an die große Fahne (13) angrenzenden Zugleisten (11) über die beiden angrenzenden Zugleisten (11) hinaus nach radial außen ragt und dort sich um die Rotationsachse (3) herum erstreckende Ausleger (14) aufweist, welche die beiden angrenzenden Zugleisten (11) übergreifen.

2. Elektrische Maschine nach Anspruch 1, **dadurch gekennzeichnet, dass** die ersten Statorbleche (5) zusätzlich weitere Fahnen (15,16) aufweisen, die zwischen den beiden in Umfangsrichtung um die Rotationsachse (3) gesehen an die jeweilige weitere Fahne (15,16) angrenzenden Zugleisten (11) nach radial außen ragen.

3. Elektrische Maschine nach Anspruch 2, **dadurch gekennzeichnet , dass** mindestens eine der weiteren Fahnen (15,16) über die beiden jeweiligen angrenzenden Zugleisten (11) hinaus nach radial außen ragt.

4. Elektrische Maschine nach Anspruch 2 oder 3, **da** - **durch gekennzeichnet** , dass die weiteren Fahnen (15,16) der ersten Statorbleche (5) unterschiedlich weit nach radial außen ragen.

5. Elektrische Maschine nach einem der obigen Ansprüche, **dadurch gekennzeichnet, dass** die Anzahl an Zugleisten (11) sechs beträgt.

6. Elektrische Maschine nach einem der obigen Ansprüche, **dadurch gekennzeichnet,**
- **dass** die Statorbleche (5,6) zusätzlich zu den ersten Statorblechen (5) zweite Statorbleche (6) umfassen,
- **dass** die zweiten Statorbleche (6) jeweils eine Anzahl von Fahnen (18,19,20) aufweisen, die jeweils zwischen den beiden in Umfangsrichtung um die Rotationsachse (3) gesehen an die jeweilige Fahne (18,19,20) angrenzenden Zugleisten (11) über die beiden angrenzenden Zugleisten (11) hinaus nach radial außen ragen,
- **dass** die Fahnen (18,19,20) der zweiten Statorbleche (6) jedoch nicht so weit nach radial außen ragen wie die großen Fahnen (13) der ersten Statorbleche (5) und keine sich um die Rotationsachse (3) herum erstreckenden Ausleger aufweisen, welche die beiden jeweils angrenzenden Zugleisten (11) übergreifen.

7. Elektrische Maschine nach Anspruch 6, **dadurch gekennzeichnet, dass** die Fahnen (18,19,20) der zweiten Statorbleche (6) unterschiedlich weit nach radial außen ragen.

8. Elektrische Maschine nach Anspruch 6 oder 7, da - **durch gekennzeichnet**, dass die Anzahl an Fahnen (18,19,20) der zweiten Statorbleche (6) gleich der Anzahl an Fahnen (13,15,16) der ersten Statorbleche (5) ist.

9. Elektrische Maschine nach einem der obigen Ansprüche, **dadurch gekennzeichnet , dass** die Statorbleche (5,6) keine weiteren Statorbleche umfassen.

10. Elektrische Maschine nach einem der obigen Ansprüche, **dadurch gekennzeichnet , dass** die Zugleisten (11) einen rechteckigen oder trapezförmigen Querschnitt aufweisen.

11. Elektrische Maschine nach einem der obigen Ansprüche, **dadurch gekennzeichnet , dass** die Statorbleche (5,6) zu Gruppen von in Richtung der Rotationsachse (3) gesehen unmittelbar aufeinanderfolgenden Statorblechen (5,6) zusammengefasst sind, wobei die Gruppen jeweils eine einheitliche Gruppenkontur aufweisen und die Gruppenkontur von Gruppe von Statorblechen (5,6) zu Gruppe von Statorblechen (5,6) variiert.

12. Elektrische Maschine nach Anspruch 11, **dadurch gekennzeichnet , dass** die Anzahl an Statorblechen (5, 6) pro Gruppe zwischen 4 und 10 liegt und/oder eine in Richtung der Rotationsachse (3) gesehene Dicke der Gruppen zwischen 2,5 mm und 6,0 mm liegt.

13. Elektrische Maschine nach Anspruch 11 oder 12, **da** - **durch gekennzeichnet** , dass in Richtung der Rotationsachse (3) gesehen die Gruppen von Statorblechen (5,6) in der Mitte in einer ersten Sequenz aufeinander folgen und in die Mitte beidseitig begrenzenden Randbereichen in einer von der ersten Sequenz verschiedenen zweiten Sequenz aufeinander folgen.

14. Landfahrzeug,
- wobei das Landfahrzeug Antriebsräder (22) aufweist,
- wobei ein Rotor (1) einer elektrischen Maschine auf mindestens eines der Antriebsräder (22) wirkt,
- wobei eine Rotationsachse (3) des Rotors (1) quer zu einer Fahrrichtung des Landfahrzeugs verläuft,
**dadurch gekennzeichnet,**
- **dass** die elektrische Maschine als elektrische Maschine nach einem der obigen Ansprüche ausgebildet ist und
- **dass** die großen Fahnen (13) der ersten Statorbleche (5) derart angeordnet sind, dass sie nicht nach unten ragen.

15. Landfahrzeug nach Anspruch 14, **dadurch ge** - **kennzeichnet**, dass die großen Fahnen (13) der ersten Statorbleche (5) derart angeordnet sind, dass sie auch nicht nach oben ragen.

16. Landfahrzeug nach Anspruch 14 oder 15, **dadurch gekennzeichnet , dass** die Antriebsräder (22) als Laufräder eines Schienenfahrzeugs ausgebildet sind.

## Claims

1. Electric machine
- wherein the electric machine has a rotor (1) which is rotatably supported in bearings (2), so that the rotor (1) is able to be rotated about an axis of rotation (3),
- wherein the electric machine has a stator (4) which radially surrounds the rotor (1) on the outside with respect to the axis of rotation (3),
- wherein the stator (4) consists of stator sheets (5, 6) which are stacked one on the other, viewed in the direction of the axis of rotation (3),
- wherein the stator sheets (5, 6), with respect to the axis of rotation (3), have a number of recesses (9) radially on the outside, which in the totality thereof form grooves (10) running in parallel to the axis of rotation (3),
- wherein tension strips (11) are arranged in the grooves (10), which are connected at their ends with end rings (12),
- wherein the stator sheets (5, 6) at least include first stator sheets (5),
- **characterised in that** the first stator sheets (5) each have at least one large lug (13), which projects radially outwards between the two tension strips (11) adjacent to the large lug (13) viewed in the circumferential direction about the axis of rotation (3) over the two adjacent tension strips (11) and has cantilevers (14) extending there about the axis of rotation (3) which reach over the two adjacent tension strips (11).

2. Electric machine according to claim 1, c h a r a c t e r i s e d i n that the first stator sheets (5) additionally have further lugs (15, 16) which project radially outwards between the two tension strips (11) adjacent to the respective further tension strip (11) viewed in the circumferential direction about the axis of rotation (3).

3. Electric machine according to claim 2, **characterised in that** at least one of the further lugs (15, 16) extends radially outwards beyond the two respective adjacent tension strips (11).

4. Electric machine according to claim 2 or 3,
**characterised in that** the further lugs (15, 16) of the first stator sheets (5) extend radially outwards by different distances.

5. Electric machine according to one of the above claims,
**characterised in that** the number of tension strips (11) amounts to six.

6. Electric machine according to one of the above claims,
**characterised in that**,
- the stator sheets (5, 6) include second stator sheets (6) in addition to the first stator sheets (5)
- that the second stator sheets (6) each have a number of lugs (18, 19, 20) which project in each case radially outwards between the two tension strips (11) adjacent to the respective lugs (18, 19, 20) viewed in the circumferential direction about the axis of rotation (3) beyond the two adjacent tension strips (11),
- that the lugs (18, 19, 20) of the second stator sheets (6) do not however project radially outwards as far as the large lugs (13) of the first stator sheets (5) and do not have any cantilevers extending about the axis of rotation (3), which reach over the two adjacent tension strips (11) in each case.

7. Electric machine according to claim 6, **characterised in that** the lugs (18, 19, 20) of the two stator sheets (6) project radially outwards to different distances,

8. Electric machine according to claim 6 or 7,
**characterised in that** the number of lugs (18, 19, 20) of the second stator sheets (6) is equal to the number of lugs (13, 15, 16) of the first stator sheets (5).

9. Electric machine according to one of the above claims,
**characterised in that** the stator sheets (5, 6) do not include any further stator sheets.

10. Electric machine according to one of the above claims,
**characterised in that** the tension strips (11) have a rectangular or trapezoidal cross section.

11. Electric machine according to one of the above claims,
**characterised in that** the stator sheets (5, 6) are grouped into groups of directly consecutive stator sheets (5, 6) viewed in the direction of the axis of rotation (3), wherein the groups each have a uniform group contour and the group contour varies from group of stator sheets (5, 6) to group of stator sheets (5, 6).

12. Electric machine according to claim 11
**characterised in that** the number of stator sheets (5, 6) per group lies between 4 and 10 and/or a thickness of the groups, viewed in the direction of the axis of rotation (3), lies between 2.5 mm and 6.0 mm.

13. Electric machine according to claim 11 or 12,
**characterised in that**, viewed in the direction of the axis of rotation (3), the groups of stator sheets (5, 6) in the middle follow each other in a first sequence and, in edge areas adjacent to the middle on both sides, follow each other in a second sequence different from the first sequence.

14. Land vehicle
- wherein the land vehicle has drive wheels (22),
- wherein a rotor (1) of an electric machine acts on at least one of the drive wheels (22),
- wherein an axis of rotation (3) of the rotor (1) runs transverse to a direction of travel of the land vehicle,
**characterised in that**,
- the electric machine is embodied as an electric machine in accordance with one of the above claims and
- the large lugs (13) of the first stator sheets (5) are arranged such that they do not project downwards.

15. Land vehicle according to claim 14, **characterised in that** the large lugs (13) of the first stator sheets (5) are also arranged such that they do not project upwards.

16. Land vehicle according to claim 14 or 15,
**characterised in that** the drive wheels (22) are embodied as running wheels of a rail vehicle.

## Revendications

1. Machine électrique,
- dans laquelle la machine électrique a un rotor ( 1 ) monté tournant dans des paliers ( 2 ) de manière à ce que le rotor ( 1 ) puisse tourner autour d'un axe ( 3 ) de rotation,
- dans laquelle la machine électrique a un stator ( 4 ) entourant, rapporté à l'axe ( 3 ) de rotation, à l'extérieur radialement le rotor ( 1 ),
- dans laquelle le stator ( 4 ) et constitué de tôles ( 5, 6 ) statoriques qui sont empilées les unes sur les autres considérées dans la direction de l'axe ( 3 ) de rotation,
- dans laquelle les tôles ( 5, 6 ) statoriques ont, rapporté à l'axe ( 3 ) de rotation, à l'extérieur radialement, un certain nombre d'évidements ( 9 ) qui forment dans leur ensemble des encoches ( 10 ) s'étendant parallèlement à l'axe ( 3 ) de rotation,
- dans laquelle dans les encoches ( 10 ) sont disposées des tirants ( 11 ) reliés à leurs extrémités à des pénétrations ( 12 ),
- dans laquelle les tôles ( 6 ) statoriques comprennent au moins des premières tôles ( 5 ) statoriques,
- **caractérisée en ce que**
les premières tôles ( 5 ) statoriques ont respectivement au moins un grand talon ( 13 ), qui dépasse vers l'extérieur radialement entre les deux tirants ( 11 ) voisins du grand talon ( 13 ) considéré dans la direction périphérique autour de l'axe ( 3 ) de rotation et y a des excroissances ( 14 ) qui s'étendent autour de l'axe ( 3 ) de rotation et qui recouvrent les deux tirants ( 11 ) voisins.

2. Machine électrique suivant la revendication 1, **caractérisée en ce que** les premières tôles ( 5 ) statoriques ont en outre d'autres talons ( 15,16 ), qui dépassent vers l'extérieur radialement entre les deux tirants ( 11 ) voisins de respectivement l'autre talon ( 15, 16 ) considéré dans la direction périphérique autour de l'axe ( 3 ) de rotation.

3. Machine électrique suivant la revendication 2, **caractérisée en ce qu'**au moins l'un des autres talons ( 15, 16 ) dépasse vers l'extérieur radialement des deux tirants ( 11 ) voisins respectivement

4. Machine électrique suivant la revendication 2 ou 3, **caractérisée en ce que** les autres talons ( 15, 16 ) des premières tôles ( 5 ) statoriques dépassent vers l'extérieur radialement d'une manière différente.

5. Machine électrique suivant l'une des revendications précédentes, **caractérisée en ce que** le nombre des tirants ( 11 ) est de six.

6. Machine électrique suivant l'une des revendications précédentes, **caractérisée,**
- **en ce que** les tôles ( 5, 6 ) statoriques comprennent, outre les premières tôles ( 5 ) statoriques, des deuxièmes tôles ( 6 ) statoriques,
- **en ce que** les deuxièmes tôles ( 6 ) statoriques ont chacune un certain nombre de talons ( 18, 19, 20 ) qui dépassent vers l'extérieur radialement des deux tirants ( 11 ) voisins entre les deux tirants ( 11 ) voisins du talon ( 18, 19, 20 ) respectif considéré dans la direction périphérique autour de l'axe ( 3 ) de rotation,
- **en ce que** les talons ( 18, 19, 20 ) des deuxièmes tôles ( 6 ) statoriques ne dépassent pas toutefois autant vers l'extérieur radialement que les grands talons ( 13 ) des premières tôles ( 5 ) statoriques et n'ont pas d'excroissance s'étendant autour de l'axe ( 3 ) de rotation et recouvrant les deux tirants ( 11 ) voisins.

7. Machine électrique suivant la revendication 6, **caractérisée en ce que** les talons ( 18, 19, 20 ) des deuxièmes tôles ( 6 ) statoriques dépassent vers l'extérieur radialement d'une manière différente.

8. Machine électrique suivant la revendication 6 ou 7, **caractérisée en ce que** le nombre des talons ( 18, 19, 20 ) des deuxièmes tôles ( 6 ) statoriques est égal au nombre de talons ( 13, 15, 16 ) des premières tôles ( 5 ) statoriques.

9. Machine électrique suivant l'une des revendications précédentes, **caractérisée en ce que** les tôles ( 5, 6 ) statoriques ne comprennent pas d'autre tôle statorique.

10. Machine électrique suivant l'une des revendications précédentes, **caractérisée en ce que** les tirants ( 11 ) ont une section transversale rectangulaire ou trapézoïdale.

11. Machine électrique suivant l'une des revendications précédentes, **caractérisée en ce que** les tôles ( 5, 6 ) statoriques sont rassemblées en des groupes de tôles ( 5, 6 ) statoriques se succédant directement considérés dans la direction de l'axe ( 3 ) de rotation, les groupes ayant chacun un contour unitaire et le contour varie d'un groupe de tôles ( 5, 6 ) statoriques à l'autre.

12. Machine électrique suivant la revendication 11, **caractérisée en ce que** le nombre de tôles ( 5, 6 ) statoriques par groupe est compris entre 4 et 10 et/ou une épaisseur, considérée dans la direction de l'axe ( 3 ) de rotation, des groupes est comprise entre 2,5 mm et 6,0 mm.

13. Machine électrique suivant la revendication 11 ou 12, **caractérisée en ce que**, considérés dans la direction de l'axe ( 3 ) de rotation, les groupes de tôles ( 5, 6 ) statoriques se suivent au milieu suivant une première séquence et, dans des parties de bord voisines des deux côtés du milieu, se suivent en une deuxième séquence différente de la première séquence.

14. Véhicule terrestre,
- dans lequel le véhicule terrestre a des roues ( 22 ) motrices,
- dans lequel un rotor ( 1 ) d'une machine électrique agit sur au moins l'une des roues ( 22 ) motrices,
- dans lequel un axe ( 3 ) de rotation du rotor ( 1 ) s'étend transversalement à une direction de marche de véhicule terrestre,
**caractérisé,**
- **en ce que** la machine électrique est constituée sous la forme d'une machine électrique suivant l'une des revendications précédentes et
- **en ce que** les grands talons ( 13 ) des premières tôles ( 5 ) statoriques sont disposés de manière à ne pas dépasser vers le bas.

15. Véhicule terrestre suivant la revendication 14, caractérisé en que les grands talons ( 13 ) des premières tôles ( 5 ) statoriques sont disposés de manière à ne pas dépasser non plus vers le haut.

16. Véhicule terrestre suivant la revendication 14 ou 15, **caractérisé en ce que** les roues ( 22 ) motrices sont constituées sous la forme de roues de roulement d'un véhicule ferroviaire.
